# EUROPÄISCHE PATENTSCHRIFT

(11) **EP 3 113 969 B1**
(45) Veröffentlichungstag und Bekanntmachung des Hinweises auf die Patenterteilung: **06.06.2018**
(21) Anmeldenummer: 14712222.0
(22) Anmeldetag: 07.03.2014
(51) Int. Cl.: B60K 37/06, G06F 3/01

(54) **ANWENDERSCHNITTSTELLE UND VERFAHREN ZUR SIGNALISIERUNG EINER 3D-POSITION EINES EINGABEMITTELS BEI DER GESTENERFASSUNG**
USER INTERFACE AND METHOD FOR SIGNALLING A 3D POSITION OF INPUT MEANS DURING GESTURE DETECTION
INTERFACE UTILISATEUR ET PROCÉDÉ DE SIGNALISATION D'UNE POSITION EN 3D D'UN MOYEN DE SAISIE LORS DE LA DÉTECTION DE GESTES

(43) Veröffentlichungstag der Anmeldung: 11.01.2017
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2014/054447
(87) Internationale Veröffentlichungsnummer: WO 2015/131953

(56) Entgegenhaltungen:
- DE-A1-102012 000 201

## Beschreibung

### Stand der Technik

Die vorliegende Erfindung betrifft eine Anwenderschnittstelle sowie ein Verfahren zur Signalisierung einer Position eines Eingabemittels bezüglich eines Bereiches zur 3D-Gestenerfassung. Insbesondere betrifft die vorliegende Erfindung eine Möglichkeit zur Beschleunigung des Lernprozesses des Anwenders bezüglich der Grenzen eines 3D-Bereiches zur Gestenbedienung.

Die 3D-Gestenbedienung erfreut rasch zunehmender Beliebtheit für Anwenderschnittstellen von mobilen Endgeräten sowie von Fortbewegungsmitteln. Der zur Erkennung des Eingabemittels (z.B. die Hand eines Anwenders) verwendete Sensor hat dabei nur einen begrenzten Erfassungsbereich. Der Anwender muss die Geste innerhalb des Erfassungsbereiches durchführen, damit diese korrekt erkannt werden kann. Verlässt die Hand des Anwenders den Erfassungsbereich, liegen dem System lediglich unvollständige Daten zur Interpretation und Klassifizierung der durchgeführten Geste vor. Eine fehlerfreie Erkennung ist in diesem Fall nicht mehr gewährleistet. Während sich für die Veranschaulichung eines 2D-Eingabemittels (z.B. eine Maus) ein sogenannter Cursor in Form einer Pfeildarstellung durchgesetzt hat, welche dem Bildschirminhalt überlagert wird, sind für die 3D-Gestenbedienung solche Cursordarstellung nur begrenzt einsetzbar und darüber hinaus in Abhängigkeit des Anwendungsfalls aus optischen Gründen nicht wünschenswert. Insbesondere die Darstellung einer dritten Dimension ist durch herkömmliche Cursor nicht möglich.

DE 10 2011 053 449 A1 beschreibt eine Mensch-Maschine-Schnittstelle auf Gestenbasis für Fahrzeuge, bei welcher auf ein Anzeigeelement gerichtete Gesten eines Anwenders erkannt werden. Es wird vorgeschlagen, ein visuelles Symbol oder einen Zeiger auf der Anzeige zu präsentieren, um dem Benutzer einen visuellen Hinweis zur Position des aktuellen Eingabefokus in einer Eingabe zu liefern. Zudem werden Vorschläge gemacht, durch welche per Gesteneingabe ausgewählte Schaltflächen gegenüber anderen Bildschirminhalten hervorgehoben werden können. Die gattungsbildende DE 10 2012 000 201 A1 offenbart Verfahren und Vorrichtungen zum Zoomen auf einer Anzeigeeinheit eines Fahrzeugs angezeigter Funktionen unter Verwendung von im dreidimensionalen Raum ausgeführten Gesten. Um den Anwender auf die Gestenbedienung der Vorrichtung anzulernen, wird vorgeschlagen, ein Fenster auf einer Anzeige anzuzeigen, welches ein Erfassen einer ersten vorbestimmten Geste anzeigt. Das Fenster zeigt zudem Bedienrichtungen für weitere Eingaben an.

Ausgehend von diesem Stand der Technik ist es eine Aufgabe der vorliegenden Erfindung, die technischen Möglichkeiten zur Signalisierung einer Position eines Eingabemittels bei einer 3D-Gestenbedienung besser auszuschöpfen.

### Offenbarung der Erfindung

Die vorstehend genannte Aufgabe wird erfindungsgemäß durch ein Verfahren mit den Merkmalen gemäß Anspruch 1 sowie eine Anwenderschnittstelle mit den Merkmalen gemäß Anspruch 10 gelöst. Das Verfahren dient der Signalisierung einer aktuellen Position eines Eingabemittels bezüglich eines Bereiches zur 3D-Gestenerfassung für eine Anwenderschnittstelle. Die Anwenderschnittstelle kann beispielsweise in einem tragbaren elektronischen Endgerät (z.B. eine Drahtloskommunikationseinheit) oder in einem Fortbewegungsmittel vorgesehen sein. In einem ersten Schritt wird das Eingabemittel des Anwenders im Bereich zur 3D-Gestenerkennung erfasst. Das Eingabemittel wird in praktischen Anwendungen zumeist die Hand des Anwenders sein. Der 3D-Gestenerkennungsbereich ist ein Raumbereich, welcher insbesondere nicht mit einer Oberfläche einer Anzeigeeinheit zusammenfällt. In einem zweiten Schritt wird die Position des Eingabemittels durch einen Hinweis im Bereich der Ränder einer Anzeigeeinheit der Anwenderschnittstelle signalisiert. Die Anzeigeeinheit kann beispielsweise ein Bildschirm (z.B. in Verbindung mit einer berührungsempfindlichen Oberfläche auch als "Touch Screen" bezeichnet) sein, auf welchem wahlfreier Inhalt zu unterschiedlichen Funktionen dargestellt werden kann. Solche Bildschirme sind üblicherweise rechteckig ausgestaltet, so dass die Kanten des Bildschirms die Ränder der Anzeigeeinheit bilden. Der "Bereich der Ränder" geht jedoch über einen Bereich auf der Anzeigeeinheit hinaus. Beispielsweise können auch jenseits der Oberfläche der Anzeigeeinheit angeordnete Leuchtmittel / Anzeigeeinheiten verwendet werden, um den Hinweis erfindungsgemäß darzustellen. Auf solche separaten Elemente kann verzichtet werden, sofern die äußeren Bereiche der Anzeigeeinheit selbst (also Pixel im Randbereich) zur Darstellung des Hinweises bzw. der Hinweise verwendet werden. Die vorliegende Erfindung verwirklicht den Vorteil, dass der optisch nicht direkt erfassbare 3D-Gestenerfassungsbereich mittelbar visualisiert wird. Auf diese Weise kann dem Anwender der zur Gestenerfassung verwendbare Raumbereich beigebracht werden, sofern dieser den Wunsch hierzu äußert, eine insbesondere wiederholte Bedienung im Randbereich oder außerhalb der Grenzen des Gestenerfassungsbereiches erfolgt ist und/oder eine Mindestdauer seit der Aufnahme der 3D-Gestenbedienung noch nicht abgelaufen ist. Fehlbedienungen und erhöhter Rechenaufwand zur Gestenerkennung können somit vermieden werden. Zudem für eine zuverlässigere Erkennung von Gesten dazu, dass der Anwender sich frühzeitiger wieder anderen Aufgaben (z.B. Führen eines Fortbewegungsmittels) widmen kann.

Die Unteransprüche zeigen bevorzugte Weiterbildungen der Erfindung.

Bevorzugt kann eine Veränderung der Position des Eingabemittels hinsichtlich einer ersten Koordinate (z.B. eine Horizontale bezüglich der Anzeigeeinheit) erkannt werden und im Ansprechen darauf eine Position des Hinweises bzw. der Hinweise im Bereich der horizontalen Ränder der Anzeigeeinheit verändert werden. Mit anderen Worten können die Hinweise im Randbereich entsprechend der Veränderung der Position des Eingabemittels verändert werden. Auf diese Weise kann zumindest hinsichtlich zweier Koordinaten bzw. Raumdimensionen eine Signatur eines (gedachten) Fadenkreuzes für die Position des Eingabemittels erzeugt werden, welche in den Randbereichen der Anzeigeeinheit eine Orientierung über die relative Position zwischen Eingabemittel und 3D-Gestenerfassungsbereich bietet.

Entsprechend kann eine Veränderung der Position des Eingabemittels hinsichtlich einer zweiten Koordinate (z.B. eine Vertikale bezüglich der Anzeigeeinheit) erkannt werden und im Ansprechen darauf die Position des Hinweises bzw. der Hinweise im Bereich vertikaler Ränder der Anzeigeeinheit verändert werden. Die beiden vorgenannten Koordinaten können somit beispielsweise senkrecht zueinander stehend angeordnet und einer Ebene der Anzeigeeinheit einbeschrieben sein.

Zur Visualisierung einer Veränderung der Position des Eingabemittels hinsichtlich einer dritten Koordinate (z.B. in Richtung der Oberfläche der Anzeigeeinheit und/oder in Richtung eines zur Gestenerkennung verwendeten Sensors) steht bei Verwendung einer 2D-Anzeigeeinheit nun keine Koordinate mehr zur Verfügung. Erfindungsgemäß wird daher eine Gestaltung des Hinweises bzw. der Hinweise verändert, was beispielsweise eine Transparenz und/oder eine Ausdehnung ("Länge") entlang des jeweiligen Randes und/oder eine Kantenschärfte und/oder eine farbliche Gestaltung des Hinweises bzw. der Hinweise betreffen kann. Beispielsweise ist auch eine Formänderung möglich, um das Erfordernis einer Positionsveränderung in einen besseren Erfassungsbereich zu veranschaulichen. Hierbei können auch Piktogramme (nach Art von Ziffern oder Sinnbildern für Entfernungsangaben) verwendet werden. Alternativ oder zusätzlich ist eine Ausgabe in Textform möglich, um dem Anwender die Variation der aktuellen Position seiner Hand nahezulegen.

Bevorzugt entspricht die Position der Hinweise bezüglich den Begrenzungen der Ränder ("Ecken") der Anzeigeeinheit im Wesentlichen einer korrespondierenden Position des Eingabemittels bezüglich Begrenzungen des Bereiches zur 3D-Gestenerkennung, welcher durch den verwendeten Sensor aufgespannt wird. Wird beispielsweise durch den Sensor ein sich in Richtung des Sensors verjüngender Bereich zur Gestenerfassung aufgespannt, kann die Kantenlänge der Anzeigeeinheit auf die Kantenlänge des Bereiches zur 3D-Gestenerkennung derart skaliert werden, dass in Abhängigkeit eines aktuellen Abstandes vom Sensor die senkrecht zum Abstand verlaufenden Kanten des Erfassungsbereiches stets auf die komplette Länge der korrespondierenden Ränder der Anzeigeeinheit abgebildet werden. Selbstverständlich kann zum Zwecke einer sicheren Gestenerkennung der durch die Hinweise signalisierte Erkennungsbereich etwas kleiner sein als der tatsächlich zur Gestenerkennung eingerichtete Raumbereich. Dieser Unterschied kann beispielsweise nach Art eines absoluten Versatzes oder nach Art eines prozentualen Versatzes bemessen werden. Bei der vorgenannten Ausgestaltung ergibt sich eine leicht erlernbare Rückmeldung an den Anwender dahingehend, dass bei einer Annäherung an den verwendeten Sensor eine Wischgeste eine schnellere und in weiteren Grenzen vorgenommene Veränderung des Hinweises herbeiführt als eine in weiterem Abstand zum Sensor durchgeführte Wischgeste.

Sofern unterschiedliche Personen für die Bedienung der Anwenderschnittstelle vorgesehen sind, kann zusätzlich ein Wechsel in der Person des Anwenders erkannt werden, im Ansprechen worauf die Gestaltung des Hinweises bzw. der Hinweise verändert wird. Beispielsweise kann nach der 3D-Gestenbedienung durch einen Fahrer eines erfindungsgemäß ausgestatteten Fahrzeugs der Beifahrer die Anwenderschnittstelle bedienen, indem er seine Hand in den 3D-Gestenerkennungsbereich einführt. Nachdem dieser Wechsel erkannt wird, kann eine optische Rückmeldung an die (potentiellen) Anwender der Anwenderschnittstelle ausgegeben werden, indem beispielsweise eine farbliche Gestaltung des Hinweises und/oder eine Formänderung (beispielsweise in Verbindung mit einem Piktogramm als Sinnbild für einen Fahrer bzw. einen Beifahrer) den Wechsel in der Person des Anwenders quittieren.

Die grundsätzliche Aktivierung der 3D-Gestenbedienung kann gemäß dem Stand der Technik erfolgen. Die im Ansprechen hierauf angezeigten Hinweise können auch als vier Indikatoren ausgestaltet sein, deren Form- / Farbverlauf zu den Enden hin einen Bereich höherer Transparenz aufweist. Bevorzugt werden die Indikatoren kontaktanalog zu der Handposition im Sensorerfassungsbereich auf der Anzeigeeinheit verschoben. Hierbei kann die relative horizontale Position der Hand im Sensorerfassungsbereich über die relative Position der oberen und unteren Hinweise dargestellt werden. Die relative vertikale Position der Hand im Sensorerfassungsbereich kann über die relative Position der seitlichen Hinweise dargestellt werden. Die relative dritte Position ("Tiefe") der Hand im Sensorerfassungsbereich kann z.B. in Form Transparenzmodifikation des Hinweises bzw. der Hinweise erfolgen. Ist die Hand bezüglich der Tiefe im sogenannten "Sweet Spot" des Erfassungsbereichs angelangt, so werden die Hinweise auf der Anzeigeeinheit normal dargestellt. Wird der Abstand der Hand nun größer oder kleiner bezüglich des Sensors, so wird die Transparenz der Indikatoren beispielsweise erhöht oder die Kanten der Hinweise unschärfer dargestellt, um zu signalisieren, dass das Sensorsignal verbesserungsfähig ist.

Gemäß einem zweiten Aspekt der vorliegenden Erfindung wird eine Anwenderschnittstelle vorgeschlagen, welche eine Anzeigeeinheit (z.B. einen Bildschirm), eine Sensorik zur Erfassung von 3D-Gesten und eine Auswerteeinheit (z.B. in Form eines elektronischen Steuergerätes mit einem programmierbaren Prozessor) umfasst. Die Sensorik ist eingerichtet, ein Eingabemittel (z.B. eine Hand eines Anwenders) zur 3D-Gestensteuerung zu erfassen. Die Auswerteeinheit ist eingerichtet, eine Position des Eingabemittels durch einen Hinweis im Bereich der Ränder der Anzeigeeinheit der Anwenderschnittstelle zu signalisieren. Die verwendete Sensorik kann beispielsweise optisch arbeiten und/oder Infrarotsignale verwenden. Im Übrigen ergeben sich die Merkmale, die Merkmalskombinationen und die sich aus diesen ergebenden Vorteile entsprechend den Ausführungen in Verbindung mit dem erstgenannten Erfindungsaspekt.

Zusätzlich kann die Anwenderschnittstelle Leuchtmittel umfassen, welche beispielsweise als balkenförmige Leuchtelemente ausgestaltet sind und sich jeweils entlang eines Randes der Anzeigeeinheit erstrecken. Über die zusätzlichen Leuchtmittel kann der Hinweis bzw. können die Hinweise alternativ oder zusätzlich signalisiert werden. Auf diese Weise kann die Anzeigeeinheit vollständig zur Anzeige alternativer Inhalte verwendet werden.

Gemäß einem dritten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor (z.B. einer Auswerteeinheit einer erfindungsgemäßen Anwenderschnittstelle) in die Lage versetzen, die Schritte eines Verfahrens gemäß dem erstgenannten Erfindungsaspekt auszuführen. Das Computerprogrammprodukt kann beispielsweise eine CD, eine DVD, eine Blue-Ray-Disc, ein Flashspeicher, eine Festplatte, ein RAM/ROM, ein Cache etc. sein.

Gemäß einem vierten Aspekt der vorliegenden Erfindung wird eine Signalfolge repräsentierend Instruktionen vorgeschlagen, welche einen programmierbaren Prozessor (z.B. einer Auswerteeinheit einer erfindungsgemäßen Anwenderschnittstelle) in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Anwenderendgerät vorgeschlagen, welches beispielsweise als Drahtloskommunikationsgerät (z.B. ein Mobiltelefon, ein Smartphone, ein Tablet-PC o.ä.) ausgestaltet sein kann. Das Anwenderendgerät umfasst für den Zugriff auf seine Funktionen eine Anwenderschnittstelle, wie sie in Verbindung mit dem zweitgenannten Erfindungsaspekt im Detail beschrieben worden ist.

Gemäß einem sechsten Aspekt der vorliegenden Erfindung wird ein Fortbewegungsmittel (z.B. ein PKW, ein Transporter, ein LKW, ein Wasser- und/oder Luftfahrzeug) vorgeschlagen, welches eine Anwenderschnittstelle gemäß dem zweitgenannten Erfindungsaspekt umfasst. Hierbei kann die Anzeigeeinheit beispielsweise als Kombiinstrument und/oder als zentrales Informationsdisplay ausgestaltet und hierzu in ein Armaturenbrett des Fortbewegungsmittels eingelassen sein. Die Sensorik kann beispielsweise eine Infrarot-LED-Leiste in einer Mittelkonsole des Fortbewegungsmittels und/oder eine optische Kamera im Dachhimmel des Fortbewegungsmittels oberhalb der Mittelkonsole umfassen. Die Auswerteeinheit kann als elektronisches Steuergerät ausgestaltet sein und zusätzlich für andere Fortbewegungsmittel-spezifische Funktionen verwendet werden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht über Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Ansicht über Komponenten eines Ausführungsbeispiels einer erfindungsgemäßen Anwenderschnittstelle in einem Ausführungsbeispiel eines erfindungsgemäßen Anwenderendgerätes;
- Figur 3: eine schematische Darstellung einer Hand eines Anwenders in einem 3D-Gestenerfassungsbereich;
- Figur 4: eine alternative schematische Darstellung einer Hand eines Anwenders in einem 3D-Gestenerfassungsbereich;
- Figur 5 bis Figur 10: Veranschaulichungen von Bedienschritten bei der Bedienung eines Ausführungsbeispiels einer erfindungsgemäßen Anwenderschnittstelle;
- Figur 11: eine Darstellung eines alternativ ausgestalteten Ausführungsbeispiels einer erfindungsgemäßen Anwenderschnittstelle; und
- Figur 12: ein Flussdiagramm veranschaulichend Schritte eines Ausführungsbeispiels eines erfindungsgemäßen Verfahrens.

### Ausführungsformen der Erfindung

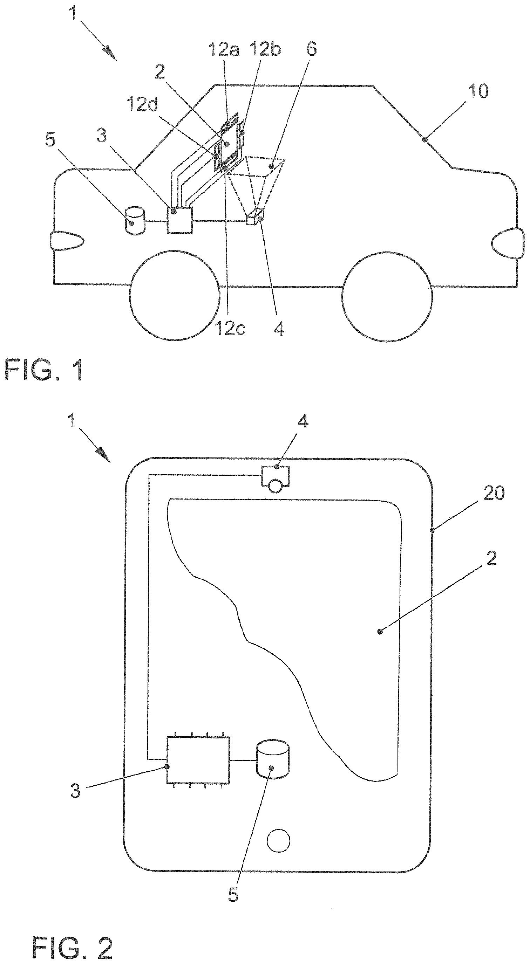

Figur 1 zeigt einen PKW 10 als Fortbewegungsmittel, in welchem ein Ausführungsbeispiel einer erfindungsgemäßen Anwenderschnittstelle 1 eingebaut ist. Ein Bildschirm 2 als Anzeigeeinheit ist in das Armaturenbrett des PKW 10 eingelassen und informationstechnisch mit einem elektronischen Steuergerät 3 als Auswerteeinheit verbunden. Das elektronische Steuergerät 3 ist wiederum mit einem Datenspeicher 5 verbunden, in welchem Referenzen für klassifizierte und zur Bedienung von Funktionen der Anwenderschnittstelle 1 vorgesehene 3D-Gesten hinterlegt sind. Unterhalb des Bildschirms 2 ist eine Infrarot-LED-Leiste 4 als Sensorik angeordnet, welche einen 3D-Erfassungsbereich 6 aufspannt. Zur Veranschaulichung einer Position eines Eingabemittels (z.B. einer Hand eines Anwenders) sind entlang der Ränder des Bildschirms 2 Leuchtelemente 12a, 12b, 12c, 12d angeordnet, über welche das elektronische Steuergerät 3 Hinweise im Bereich der Ränder des Bildschirms 2 zu aktuellen Positionen der Hand des Anwenders ausgeben kann.

Figur 2 zeigt eine schematische Ansicht eines Tablet-PCs 20 als Anwenderendgerät, in welches eine erfindungsgemäß ausgestaltete Anwenderschnittstelle 1 integriert ist. Eine optische Kamera 4 ist als Sensorik zur Erfassung von 3D-Gesten informationstechnisch mit einem programmierbaren Prozessor 3 verbunden. Unterhalb des (teilweise frei geschnittenen) Bildschirms 2 als Anzeigeeinheit ist weiter ein Datenspeicher 5 angeordnet und mit dem Prozessor 3 informationstechnisch verbunden. Die Funktionen der dargestellten Komponenten entsprechen im Wesentlichen den in Verbindung mit Figur 1 ausgeführten.

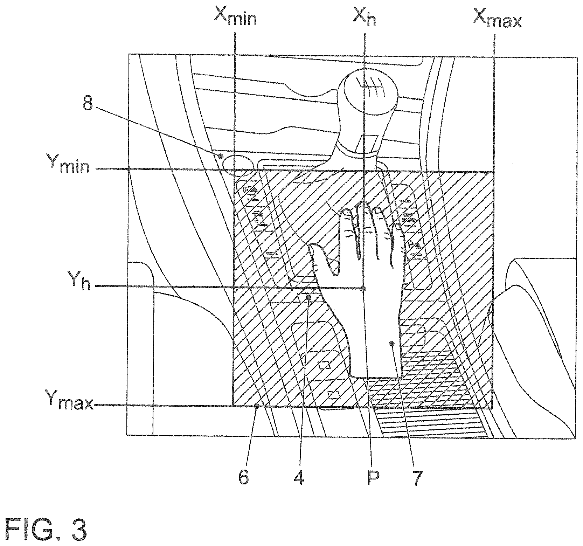

Figur 3 zeigt die Hand 7 eines Anwenders, welche in einem 3D-Erfassungsbereich 6 angeordnet ist. Der 3D-Erfassungsbereich 6 wird durch eine Sensorik 4 aufgespannt, welche in der Mittelkonsole 8 eines Fortbewegungsmittels integriert ist. Für die Möglichkeit einer sensorischen Erfassung der Hand 7 gelten die horizontalen Grenzen Xₘᵢₙ, Xₘₐₓ und die vertikalen Grenzen Yₘᵢₙ, Yₘₐₓ. Die aktuelle Position P der Hand 7 ist innerhalb der vorgenannten Grenzen Xₘᵢₙ Xₘₐₓ, Yₘᵢₙ, Yₘₐₓ mit Xₕ, Yₕ angegeben. Wie dargestellt wird die Hand 7 vollständig erfasst und kann sensorisch gut aufgelöst werden.

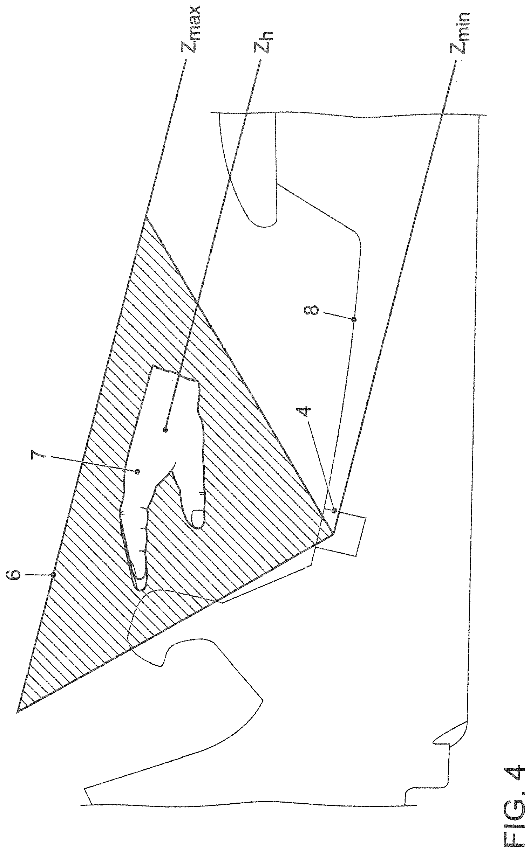

Figur 4 zeigt eine seitliche Ansicht auf die in Figur 3 dargestellte Anordnung. Der Erfassungsbereich 6 weist im Wesentlichen die Querschnittsfläche eines umgekehrten Dreiecks auf, dessen untere Spitze mit dem in die Mittelkonsole 8 integrierten Sensor 4 zusammenfällt. Hier ist auch die untere Grenze Zₘᵢₙ des Erfassungsbereichs 6 angeordnet. In einem Abstand von ca. 30 cm bis 40 cm vom Sensor 4 entfernt befindet sich die obere Grenze Zₘₐₓ des Erfassungsbereichs 6. Zwischen beiden Grenzen Zₘᵢₙ, Zₘₐₓ befindet sich die Hand 7 in einer aktuellen Höhe Zₕ.

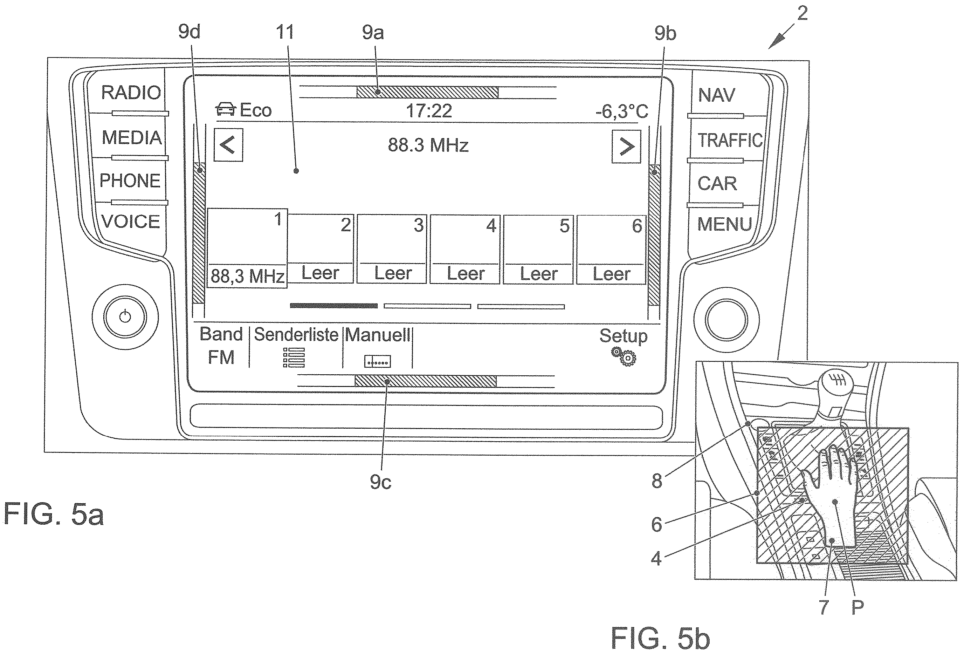

Figur 5 zeigt in Teilfigur a) eine Ansicht eines Bildschirms 2 einer erfindungsgemäß ausgestalteten Anwenderschnittstelle, auf welchem eine Bildschirmansicht 11 zur Auswahl eines Radiosenders angezeigt wird. In den Randbereichen des Bildschirms 2 werden Hinweise in Form blauer Balken 9a, 9b, 9c, 9d dargestellt, deren Grenzen in Richtung der Ecken des Bildschirms 2 durch ein zunehmendes Transparenzmaß diffus ausgestaltet sind. In Teilfigur b) ist eine mit Figur 3 korrespondierende Ansicht einer Hand 7 eines Anwenders im Erfassungsbereich 6 des verwendeten Sensors 4 dargestellt. Die Position P der Hand 7 ist mittig im Erfassungsbereich 6 gelegen und die Entfernung zum Sensor 4 ist derart gewählt, dass die Hand 7 den Erfassungsbereich 6 einerseits zwar gut ausfüllt, jedoch andererseits dessen Grenzen nicht überschreitet.

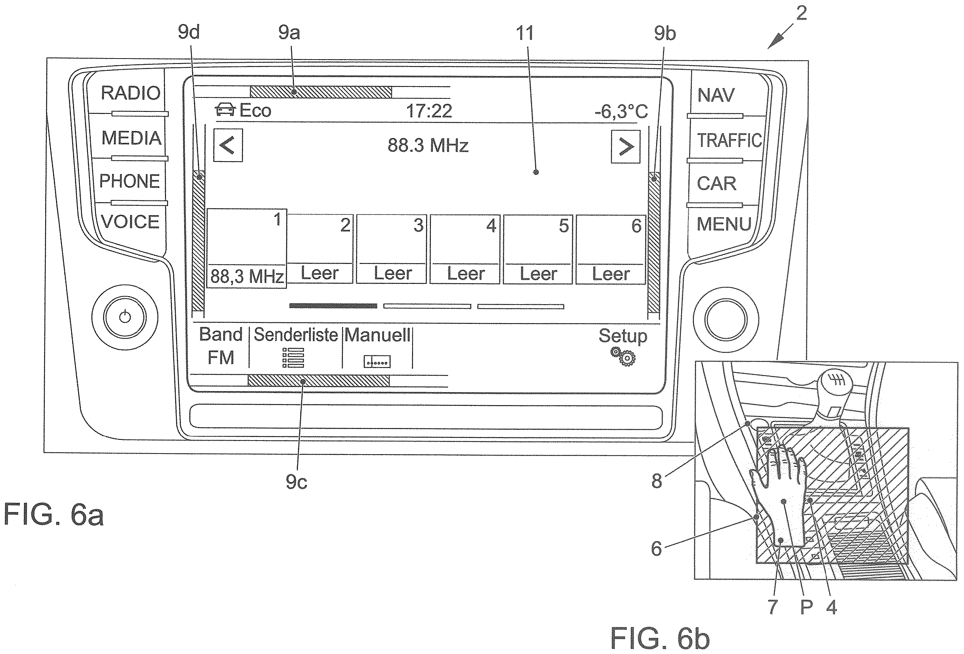

Figur 6 zeigt einen durch Veränderung der Position P der Hand 7 gegenüber der in Figur 5 gezeigten Situation modifizierten Bedienschritt, in welchem die entlang der horizontalen Ränder des Bildschirms 2 angeordneten Hinweise 9a, 9c entsprechend der Position P der Hand 7 nach links gewandert sind. Die Position der Hinweise 9b, 9d entlang der vertikalen Ränder des Bildschirms 2 hat sich hingegen nicht verändert. Ebenso ist der Abstand der Hand 7 gegenüber dem Sensor 4 unverändert geblieben.

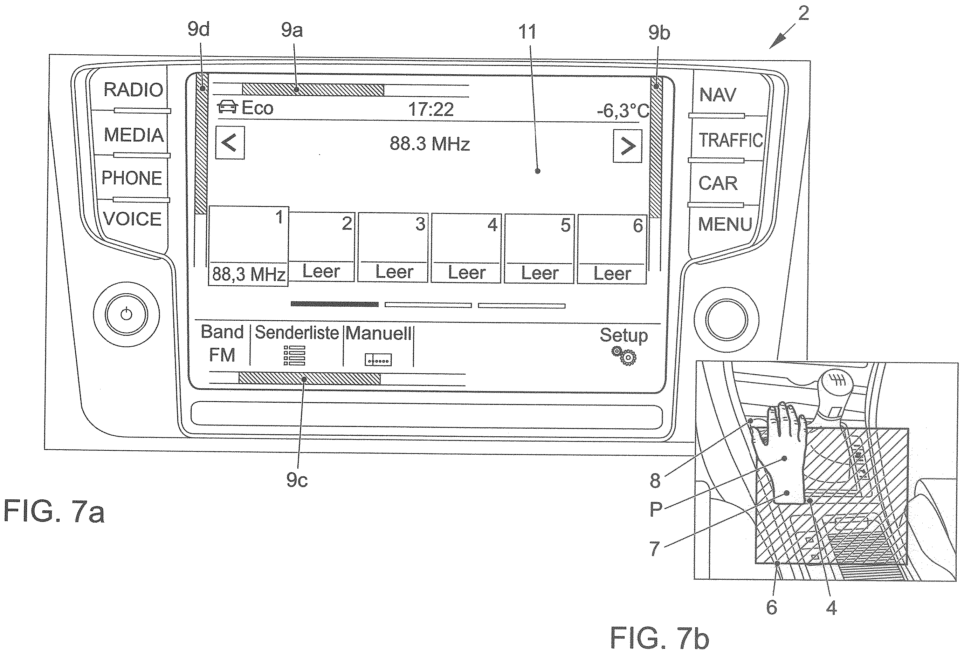

Figur 7 zeigt gegenüber der in Figur 6 gezeigten Darstellung eine zusätzliche Verschiebung der Hand 7 des Anwenders nach oben bzw. in Fahrtrichtung. Entsprechend haben sich nun auch die Hinweise 9b, 9d entlang der vertikalen Ränder des Bildschirms 2 in Richtung des oberen Randes des Bildschirms 2 bewegt.

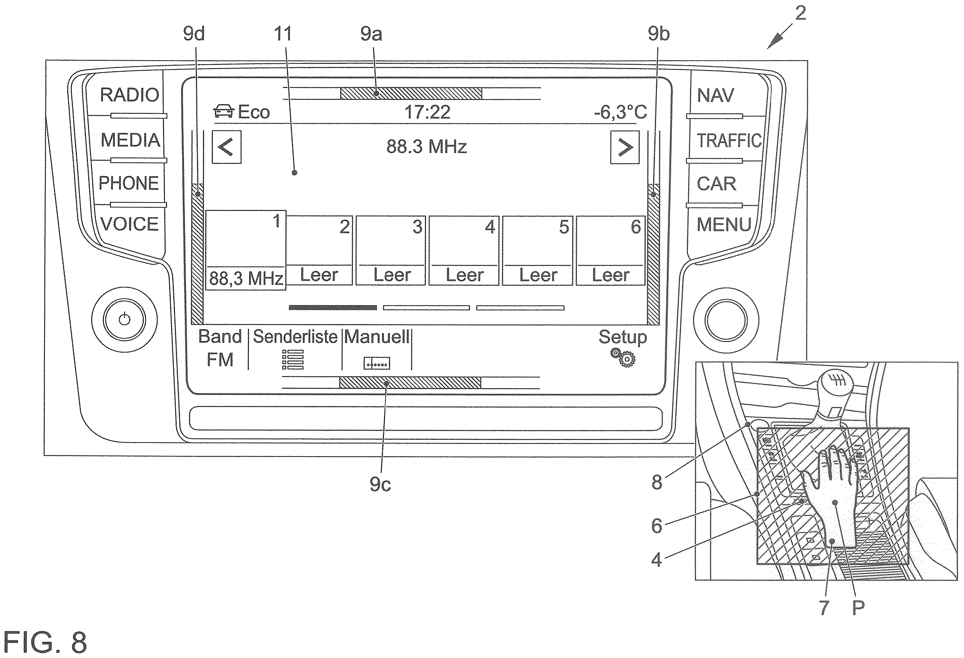

In Figur 8 ist wieder die in Figur 5 dargestellte Situation als Ausgangspunkt für eine Auswirkung einer Veränderung eines Abstandes zwischen der Hand 7 des Anwenders und dem Sensor 4 veranschaulicht.

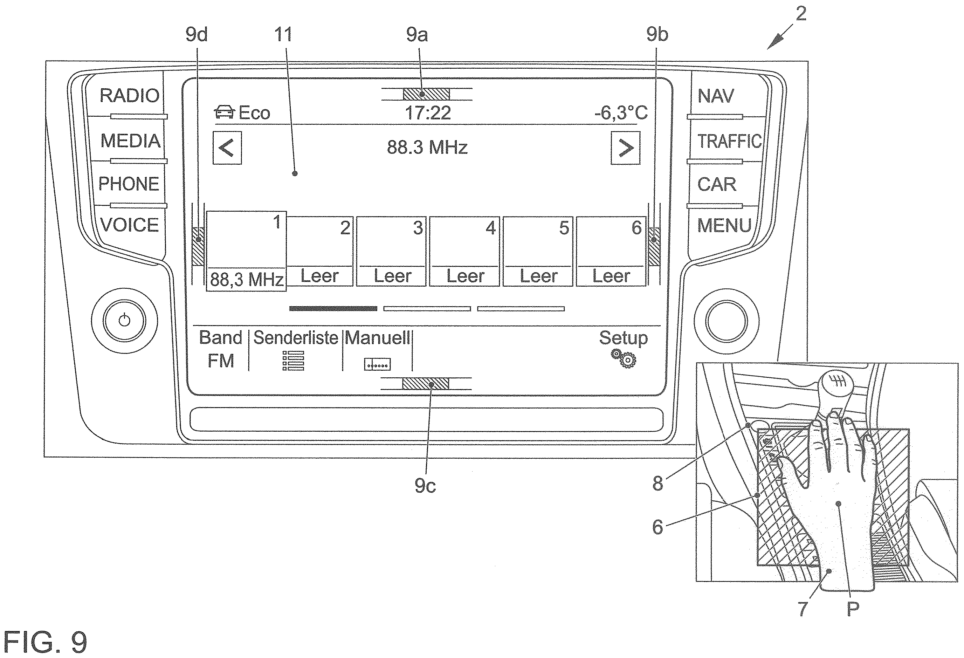

Figur 9 zeigt die Hand 7 des Anwenders, welche in einem oberen Randbereich des 3D-Erfassungsbereiches 6 angeordnet ist. Die Hand 7 ist in Richtung des Betrachters gerückt und es werden die Hinweise 9a, 9b, 9c, 9d in den Randbereichen des Bildschirms 2 bezüglich ihrer Transparenz verstärkt bzw. hinsichtlich Sättigung und Leuchtkraft vermindert dargestellt. Hieraus erkennt der Anwender, dass zur Verbesserung der sensorischen Auflösung seiner Gesten eine Annäherung an den Sensor 4 ratsam ist.

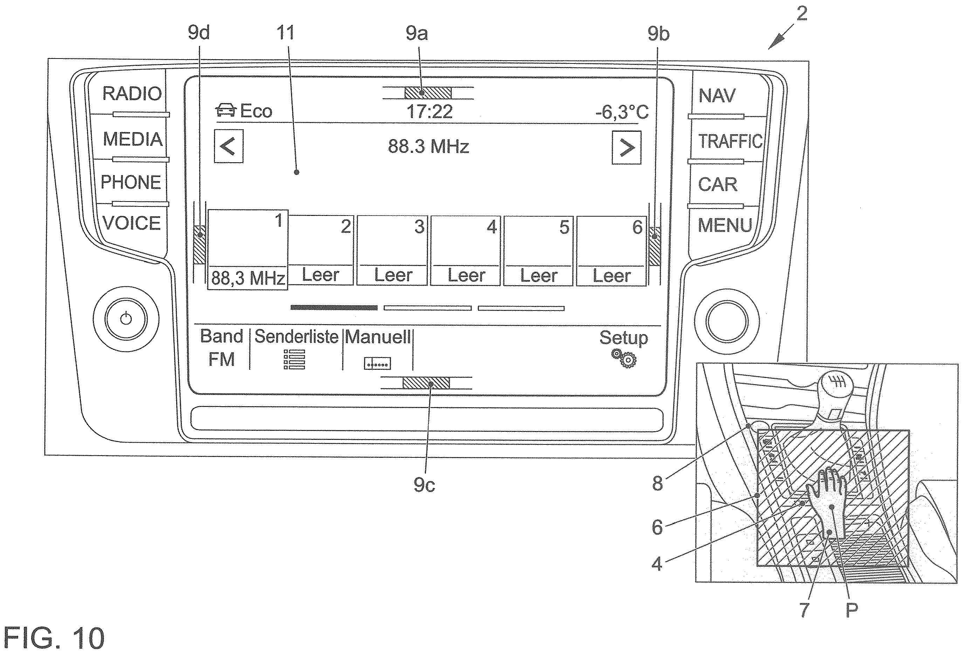

Figur 10 zeigt ausgehend von Figur 8 das Resultat einer ungünstig starken Annäherung der Hand 7 an den Sensor 4. Die Hand 7 ist daher aus Sicht des Betrachters in die Zeichenebene hineingerückt und daher verkleinert dargestellt. Das Verlassen des Sweet Spots in Richtung des Sensors 4 führt entsprechend der in Figur 9 dargestellten Situation zu einer Erhöhung der Transparenz bzw. Reduzierung von Leuchtkraft und Sättigung der Hinweise 9a, 9b, 9c, 9d. Auf diese Weise wird dem Anwender signalisiert, dass er zur Verbesserung der Auflösung seiner Gesten den Abstand zwischen seiner Hand 7 und dem verwendeten Sensor 4 erhöhen sollte.

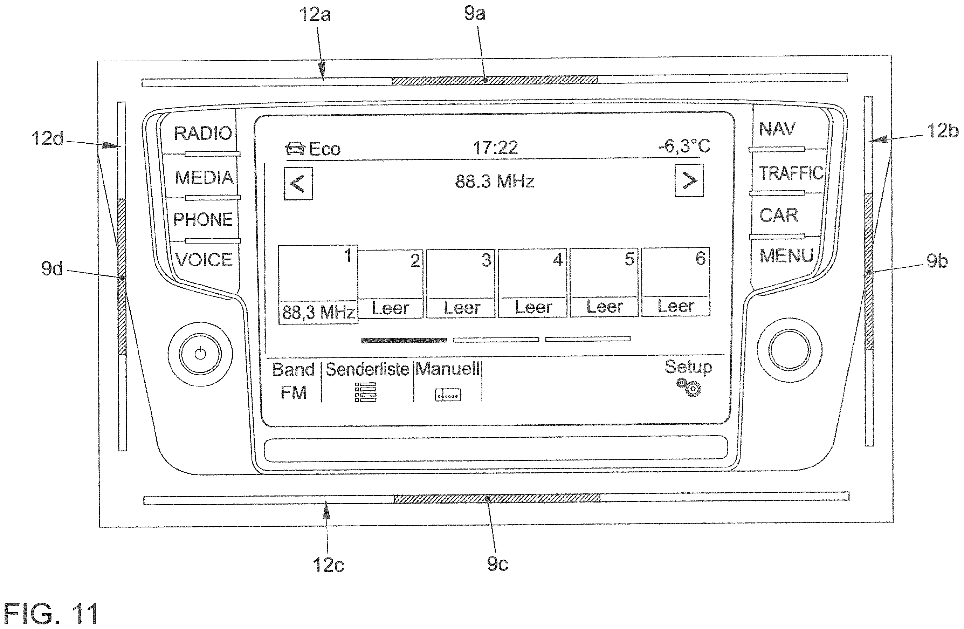

Figur 11 zeigt eine Ansicht eines alternativen Ausführungsbeispiels eines Bildschirms 2, welcher durch vier zusätzliche Leuchtmittel 12a, 12b, 12c, 12d gesäumt ist. In den Bereichen der horizontalen Ränder des Bildschirms 2 sind zwei langgestreckte Leuchtmittel 12a, 12c angeordnet. Entsprechend sind in Bereichen der vertikalen Ränder des Bildschirms vertikal orientierte Leuchtmittel 12b, 12d angeordnet. Die Leuchtmittel 12a, 12b, 12c, 12d sind als balkenförmige Leuchtelemente ausgestaltet. Zur Veranschaulichung einer Position einer Hand eines Anwenders sind die Leuchtmittel 12a, 12b, 12c, 12d eingerichtet, Hinweise 9a, 9b, 9c, 9d entsprechend den vorstehenden Ausführungen anzuzeigen. Der Bildschirm 2 kann daher vollständig für die Anzeige übriger wahlfreier Inhalte verwendet werden.

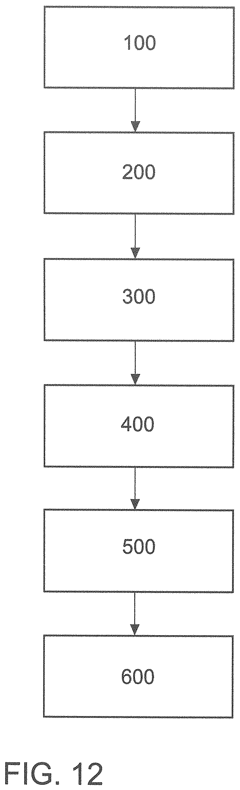

Figur 12 zeigt ein Flussdiagramm veranschaulichend Schritte eines Ausführungsbeispiels eines erfindungsgemäßen Verfahrens. Im Schritt 100 wird die Hand eines Anwenders als Eingabemittel in einem Bereich zur 3D-Gestenerkennung erfasst. Um den Anwender über die aktuelle Position des Eingabemittels hinsichtlich der Ränder des Bereiches zur 3D-Gestenerkennung zu informieren, wird in Schritt 200 die Position des Eingabemittels durch einen Hinweis im Bereich der Ränder einer Anzeigeeinheit der Anwenderschnittstelle signalisiert. Die Hinweise können als im Wesentlichen balkenförmige bzw. linienförmige Elemente dargestellt werden, wodurch die Signatur eines die Position des Eingabemittels kennzeichnenden Fadenkreuzes in den Randbereichen der Anzeigeeinheit versinnbildlicht wird. In Schritt 300 verändert der Anwender die Position des Eingabemittels hinsichtlich dreier Koordinaten (horizontal, vertikal und bezüglich einer dritten, senkrecht auf den beiden vorgenannten Koordinaten stehenden Koordinate). Im Ansprechen darauf wird in Schritt 400 auch die Position der Hinweise im Bereich der Ränder der Anzeigeeinheit sowie eine optische Gestaltung der Hinweise verändert. Hinsichtlich der Richtungen senkrecht zum Abstand zwischen der Hand des Anwenders und dem Sensor wird die Position der Hinweise in den Randbereichen der Anzeigeeinheit entsprechend verändert. Bezüglich der Veränderung in Richtung des Abstandes zwischen der Hand des Anwenders und dem Sensor erfolgt eine Veränderung der optischen Gestaltung der Hinweise. Durch das Verlassen des Sweet Spots wird die Transparenz der Hinweise stärker erhöht, wodurch die Leuchtkraft und/oder Sättigung der Hinweise gegenüber den übrigen Bildschirminhalten verringert wird. Alternativ können auch die Kanten der Hinweise weniger scharf ausgestaltet werden. Auf diese Weise wird der Anwender darauf aufmerksam gemacht, dass eine Korrektur der Position seiner Hand ratsam ist. In Schritt 500 wird ein Wechsel in der Person des Anwenders erkannt, indem der Fahrer des Fortbewegungsmittels seine Hand aus dem Erfassungsbereich entfernt, während sein Beifahrer die eigene Hand in den 3D-Erfassungsbereich führt. Dieser Wechsel wird in Schritt 600 durch eine Veränderung einer optischen Gestaltung der Hinweise quittiert. Konkret werden die Farbe und die Form der Hinweise verändert. Zusätzlich wird ein Sinnbild (englisch "Icon") eingeblendet, um die Position des aktuell vom System berücksichtigten Anwenders zu veranschaulichen. Optional können für die gewechselte Anwenderrolle vordefinierte, alternative Gestaltungsparameter bzw. Datensätze verwendet werden. Beispielsweise kann auch die Dauer der Anzeige der Hinweise in Abhängigkeit einer Befähigung der jeweiligen Anwender unterschiedlich lang ausfallen. Üblicherweise wird der Fahrer die Anwenderschnittstelle häufiger bedienen, so dass die Zeit für die Ausgabe der Hinweise kürzer ausfallen kann als für den Beifahrer. In einem Einstellungsmenü können entsprechende Parameter wunschgemäß konfiguriert werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: Auswerteeinheit
- 4: Sensorik
- 5: Datenspeicher
- 6: Erfassungsbereich
- 7: Hand des Anwenders
- 8: Mittelkonsole
- 9a, 9b, 9c, 9d: Hinweis
- 10: PKW
- 11: Bildschirminhalt
- 12a, 12b, 12c, 12d: zusätzliche Leuchtmittel
- 20: Tablet-PC
- 100-600: Verfahrensschritte
- P; Xₕ, Yₕ, Zₕ: Position der Hand
- Xₘᵢₙ, Yₘᵢₙ, Zₘᵢₙ, Xₘₐₓ, Yₘₐₓ, Zₘₐₓ: Grenzen des Erfassungsbereiches

## Patentansprüche

1. Verfahren zur Signalisierung einer Position (P, Xₕ, Yₕ, Zₕ) eines Eingabemittels (7) bezüglich eines Bereiches (6) zur 3D-Gestenerfassung für eine Anwenderschnittstelle (1) umfassend die Schritte:
- Erfassen (100) des Eingabemittels (7) eines Anwenders im Bereich (6) zur 3D-Gestenerkennung, und
- Signalisieren (200) der Position (P, Xₕ, Yₕ, Zₕ) des Eingabemittels (7) durch einen Hinweis (9a, 9b, 9c, 9d) im Bereich der Ränder einer Anzeigeeinheit (2) der Anwenderschnittstelle (1).

2. Verfahren nach Anspruch 1 weiter umfassend die Schritte
- Erkennen (300) einer Veränderung der Position (P, Xₕ, Yₕ, Zₕ) des Eingabemittels (7) hinsichtlich einer ersten Koordinate (Xₕ), und im Ansprechen darauf
- Verändern (400) der Positionen der Hinweise (9a, 9c) im Bereich horizontaler Ränder der Anzeigeeinheit (2).

3. Verfahren nach einem der Ansprüche 1 oder 2 weiter umfassend die Schritte
- Erkennen (300) einer Veränderung der Position (P, Xₕ, Yₕ, Zₕ) des Eingabemittels (7) hinsichtlich einer zweiten Koordinate (Yₕ), und im Ansprechen darauf
- Verändern (400) der Positionen der Hinweise (9b, 9d) im Bereich vertikaler Ränder der Anzeigeeinheit (2).

4. Verfahren nach einem der vorstehenden Ansprüche weiter umfassend die Schritte
- Erkennen (300) einer Veränderung der Position (P, Xₕ, Yₕ, Zₕ) des Eingabemittels (7) hinsichtlich einer dritten Koordinate (Zₕ), und im Ansprechen darauf
- Verändern (400) einer Gestaltung der Hinweise (9a, 9b, 9c, 9d).

5. Verfahren nach Anspruch 4, wobei das Verändern der Gestaltung der Hinweise (9a, 9b, 9c, 9d)
- eine Transparenz, und/oder
- eine Ausdehnung entlang des jeweiligen Randes, und/oder
- eine Kantenschärfe, und/oder
- eine Farbe
betrifft.

6. Verfahren nach einem der vorstehenden Ansprüche, wobei sich die Position der Hinweise (9a, 9b, 9c, 9d) zu Begrenzungen der Ränder der Anzeigeeinheit (2) im Wesentlichen entsprechend einer Position (P, Xₕ, Yₕ) des Eingabemittels (7) zu Begrenzungen (Xₘᵢₙ, Xₘₐₓ, Yₘᵢₙ, Yₘₐₓ) des Bereiches (6) zur 3D-Gestenerkennung verhalten.

7. Verfahren nach einem der vorstehenden Ansprüche, wobei die Hinweise (9a, 9b, 9c, 9d) auf der Anzeigeeinheit (2) der Anwenderschnittstelle (1) angezeigt werden.

8. Verfahren nach einem der vorstehenden Ansprüche, wobei die Hinweise (9a, 9b, 9c, 9d) auf separaten Leuchtmitteln (12a, 12b, 12c, 12d) neben der Anzeigeeinheit (2) der Anwenderschnittstelle (1) angezeigt werden.

9. Verfahren nach einem der vorstehenden Ansprüche, weiter umfassend
- Erkennen (500) eines Wechsels in der Person des Anwenders, und im Ansprechen darauf
- Verändern (600) einer Gestaltung der Hinweise (9a, 9b, 9c, 9d).

10. Anwenderschnittstelle umfassend
- eine Anzeigeeinheit (2),
- eine Sensorik (6), und
- eine Auswerteeinheit (3),
- wobei die Sensorik (4) eingerichtet ist, ein Eingabemittel (7) zur 3D-Gestensteuerung zu erfassen (100),
**dadurch gekennzeichnet, dass**
- die Auswerteeinheit (3) eingerichtet ist, eine Position (P, Xₕ, Yₕ, Zₕ) des Eingabemittels (7) durch einen Hinweis (9a, 9b, 9c, 9d) im Bereich der Ränder der Anzeigeeinheit (2) der Anwenderschnittstelle (1) zu signalisieren.

11. Anwenderschnittstelle nach Anspruch 10 weiter umfassend
- zusätzliche Leuchtmittel (12a, 12b, 12c, 12d), insbesondere als balkenförmige Leuchtelemente ausgestaltet, jeweils entlang eines Randes der Anzeigeeinheit (2), welche eingerichtet sind, den Hinweis (9a, 9b, 9c, 9d) zu signalisieren.

12. Anwenderschnittstelle nach Anspruch 10 oder 11, wobei die Anwenderschnittstelle (1) eingerichtet ist, ein Verfahren gemäß einem der vorstehenden Ansprüche 1 bis 9 durchzuführen.

13. Computerprogrammprodukt umfassend Instruktionen oder Signalfolge repräsentierend Instruktionen, welche, wenn Sie auf einer Auswerteeinheit (3) einer Anwenderschnittstelle (1) nach einem der Ansprüche 10 bis 12 ausgeführt werden, die Anwenderschnittstelle (1) veranlassen, die Schritte eines Verfahrens nach einem der Ansprüche 1 bis 9 durchzuführen.

14. Anwenderendgerät, insbesondere Drahtloskommunikationsgerät (20), bevorzugt Tablet-PC oder Smartphone, umfassend eine Anwenderschnittstelle (1) nach einem der Ansprüche 10 bis 12.

15. Fortbewegungsmittel, insbesondere Fahrzeug, umfassend eine Anwenderschnittstelle (1) nach einem der Ansprüche 10 bis 12.

## Claims

1. Method for signalling a position (P, Xₕ, Yₕ, Zₕ) of an input means (7) in regard to an area (6) for 3D gesture capture for a user interface (1), comprising the steps of:
- capturing (100) the input means (7) of a user in the area (6) for 3D gesture detection, and
- signalling (200) the position (P, Xₕ, Yₕ, Zₕ) of the input means (7) by virtue of an indication (9a, 9b, 9c, 9d) in the area of the edges of a display unit (2) of the user interface (1).

2. Method according to Claim 1, further comprising the steps of:
- detecting (300) alteration of the position (P, Xₕ, Yₕ, Zₕ) to the input means (7) in respect of a first coordinate (Xₕ), and, in response thereto,
- altering (400) the positions of the indications (9a, 9c) in the area of horizontal edges of the display unit (2).

3. Method according to either of Claims 1 and 2, further comprising the steps of:
- detecting (300) alteration of the position (P, Xₕ, Yₕ, Zₕ) of the input means (7) in respect of a second coordinate (Yₕ), and, in response thereto,
- altering (400) the positions of the indications (9b, 9d) in the area of vertical edges of the display unit (2).

4. Method according to one of the preceding claims, further comprising the steps of:
- detecting (300) alteration of the position (P, Xₕ, Yₕ, Zₕ) of the input means (7) in respect of a third coordinate (Zₕ), and, in response thereto,
- altering (400) a design of the indications (9a, 9b, 9c, 9d).

5. Method according to Claim 4, wherein the altering of the design of the indications (9a, 9b, 9c, 9d) relates to
- a transparency, and/or
- an extent along the respective edge, and/or
- an edge sharpness, and/or
- a colour.

6. Method according to one of the preceding claims, wherein the position of the indications (9a, 9b, 9c, 9d) in relation to boundaries of the edges of the display unit (2) behave substantially in accordance with a position (P, Xₕ, Yₕ) of the input means (7) in relation to boundaries (Xₘᵢₙ, Xₘₐₓ, Yₘᵢₙ, Yₘₐₓ) of the area (6) for 3D gesture detection.

7. Method according to one of the preceding claims, wherein the indications (9a, 9b, 9c, 9d) are displayed on the display unit (2) of the user interface (1).

8. Method according to one of the preceding claims, wherein the indications (9a, 9b, 9c, 9d) are displayed on separate illuminants (12a, 12b, 12c, 12d) next to the display unit (2) of the user interface (1).

9. Method according to one of the preceding claims, further comprising
- detecting (500) a change in the person of the user, and, in response thereto,
- altering (600) a design of the indications (9a, 9b, 9c, 9d).

10. User interface comprising:
- a display unit (2),
- a sensor system (6), and
- an evaluation unit (3),
- wherein the sensor system (4) is set up to capture (100) an input means (7) for 3D gesture control,
**characterized in that**
- the evaluation unit (3) is set up to signal a position (P, Xₕ, Yₕ, Zₕ) of the input means (7) by virtue of an indication (9a, 9b, 9c, 9d) in the area of the edges of the display unit (2) of the user interface (1).

11. User interface according to Claim 10, further comprising:
- additional illuminants (12a, 12b, 12c, 12d), in particular configured as bar-shaped light-emitting elements, in each case along an edge of the display unit (2), which are set up to signal the indication (9a, 9b, 9c, 9d).

12. User interface according to Claim 10 or 11, wherein the user interface (1) is set up to perform a method according to one of the preceding claims 1 to 9.

13. Computer program product comprising instructions or a signal train representing instructions that, when executed on an evaluation unit (3) of a user interface (1) according to one of Claims 10 to 12, prompt the user interface (1) to perform the steps of a method according to one of Claims 1 to 9.

14. User terminal, in particular wireless communication device (20), preferably a tablet PC or Smartphone, comprising a user interface (1) according to one of Claims 10 to 12.

15. Means of locomotion, in particular vehicle, comprising a user interface (1) according to one of Claims 10 to 12.

## Revendications

1. Procédé pour la signalisation d'une position (P, Xₕ, Yₕ, Zₕ) d'un moyen de saisie (7) par rapport à une zone (6) pour la détection de gestes en 3D pour une interface utilisateur (1) comprenant les étapes suivantes :
- la détection (100) du moyen de saisie (7) d'un utilisateur dans la zone (6) pour la reconnaissance de gestes en 3D, et
- la signalisation (200) de la position (P, Xₕ, Yₕ, Zₕ) du moyen de saisie (7) par une indication (9a, 9b, 9c, 9d) dans la zone des bords d'une unité d'affichage (2) de l'interface utilisateur (1) .

2. Procédé selon la revendication 1, comprenant en outre les étapes suivantes :
- la reconnaissance (300) d'un changement de la position (P, Xₕ, Yₕ, Zₕ) du moyen de saisie (7) concernant une première coordonnée (Xₕ), et en réponse à celle-ci,
- le changement (400) des positions des indications (9a, 9c) dans la zone de bords horizontaux de l'unité d'affichage (2).

3. Procédé selon l'une des revendications 1 ou 2, comprenant en outre les étapes suivantes :
- la reconnaissance (300) d'un changement de la position (P, Xₕ, Yₕ, Zₕ) du moyen de saisie (7) concernant une deuxième coordonnée (Yₕ), et en réponse à celle-ci
- le changement (400) des positions des indications (9b, 9d) dans la zone de bords verticaux de l'unité d'affichage (2).

4. Procédé selon l'une des revendications précédentes, comprenant en outre les étapes suivantes :
- la reconnaissance (300) d'un changement de la position (P, Xₕ, Yₕ, Zₕ) du moyen de saisie (7) concernant une troisième coordonnées (Zₕ), et en réponse à celle-ci,
- le changement (400) d'une configuration des indications (9a, 9b, 9c, 9d).

5. Procédé selon la revendication 4, dans lequel le changement de la configuration des indications (9a, 9b, 9c, 9d) concerne
- une transparence, et/ou
- une extension le long du bord respectif, et/ou
- une netteté des contours, et/ou
- une couleur.

6. Procédé selon l'une des revendications précédentes, dans lequel la position des indications (9a, 9b, 9c, 9d) par rapport à des délimitations des bords de l'unité d'affichage (2) se comportent sensiblement conformément à une position (P, Xₕ, Yₕ) du moyen de saisie (7) par rapport à des délimitations (Xₘᵢₙ, Xₘₐₓ, Yₘᵢₙ, Yₘₐₓ) de la zone (6) pour la reconnaissance de gestes en 3D.

7. Procédé selon l'une des revendications précédentes, dans lequel les indications (9a, 9b, 9c, 9d) sont affichées sur l'unité d'affichage (2) de l'interface utilisateur (1).

8. Procédé selon l'une des revendications précédentes, dans lequel les indications (9a, 9b, 9c, 9d) sont affichées sur des moyens lumineux (12a, 12b, 12c, 12d) séparés à côté de l'unité d'affichage (2) de l'interface utilisateur (1).

9. Procédé selon l'une des revendications précédentes, comprenant en outre :
- la reconnaissance (500) d'un changement en la personne de l'utilisateur, et en réponse à celle-ci
- le changement (600) d'une configuration des indications (9a, 9b, 9c, 9d).

10. Interface utilisateur comprenant :
- une unité d'affichage (2),
- des capteurs (6), et
- une unité d'analyse (3),
- dans laquelle les capteurs (4) sont étudiés pour détecter un moyen de saisie (7) pour la commande de gestes en 3D (100),
**caractérisée en ce que**
- l'unité d'analyse (3) est étudiée pour signaler une position (P, Xₕ, Yₕ, Zₕ) du moyen de saisie (7) grâce à une indication (9a, 9b, 9c, 9d) dans la zone des bords de l'unité d'affichage (2) de l'interface utilisateur (1).

11. Interface utilisateur selon la revendication 10, comprenant en outre :
- des moyens lumineux supplémentaires (12a, 12b, 12c, 12d), en particulier réalisés en forme d'éléments lumineux en forme de barres, respectivement le long d'un bord de l'unité d'affichage (2), lesquels sont étudiés pour signaler l'indication (9a, 9b, 9c, 9d).

12. Interface utilisateur selon la revendication 10 ou 11, dans laquelle l'interface utilisateur (1) est étudiée pour mettre en oeuvre un procédé selon l'une des revendications 1 à 9 précédentes.

13. Produit de programme informatique comprenant des instructions, ou une suite de signaux représentant des instructions, lesquelles, lorsqu'elles sont exécutées sur une unité d'analyse (3) d'une interface utilisateur (1) selon l'une des revendications 10 à 12, incitent l'interface utilisateur (1) à mettre en oeuvre les étapes d'un procédé selon l'une des revendications 1 à 9.

14. Appareil terminal d'utilisateur, en particulier appareil de communication sans fil (20), de préférence une tablette PC ou un smartphone, comprenant une interface utilisateur (1) selon l'une des revendications 10 à 12.

15. Moyen de déplacement, en particulier véhicule, comprenant une interface utilisateur (1) selon l'une des revendications 10 à 12.
